Europäisches Patentamt
European Patent Office
Office européen des brevets

(11) Publication number: 0 326 717 A1

# EUROPEAN PATENT APPLICATION

(21) Application number: 88200170.4

(22) Date of filing: 01.02.88

(51) Int. Cl.4: C08K 5/34 , C08L 53/02

(43) Date of publication of application: 09.08.89 Bulletin 89/32

(84) Designated Contracting States: ES

(71) Applicant: SHELL INTERNATIONALE RESEARCH MAATSCHAPPIJ B.V.
Carel van Bylandtlaan 30
NL-2596 HR Den Haag(NL)

(72) Inventor: Sakagami, Toshinori
11-24, 2-chome Tsukiji
Chuo-ku Tokyo(JP)
Inventor: Ito, Hisaharu
11-24, 2-chome Tsukiji
Chuo-ku Tokyo(JP)
Inventor: Nagano, Masanobu
11-24, 2-chome Tsukiji
Chuo-ku Tokyo(JP)
Inventor: Miyachi, Takumi
11-24, 2-chome Tsukiji
Chuo-ku Tokyo(JP)

(74) Representative: Aalbers, Onno et al
P.O. Box 302
NL-2501 CH The Hague(NL)

## (54) Bloc copolymer compositions and process for the preparation thereof.

(57) An aromatic vinyl compound-conjugated diene block copolymer composition having improved light stability comprises a mixture of a 2-(hydroxyphenyl)-substituted benzotriazole and an ester of a sterically hindered 4-hydroxypiperidine, 0.3-5 parts by weight per 100 pbw of block copolymer being present and the weight ratio benzotriazole to ester being 20:80 to 80:20.

EP 0 326 717 A1

Xerox Copy Centre

# BLOCK COPOLYMER COMPOSITIONS AND PROCESS FOR THE PREPARATION THEREOF

The invention relates to a composition comprising an aromatic vinyl compound-conjugated diene block copolymer. The invention also relates to a process for the preparation of such block copolymer.

Aromatic vinyl compound-conjugated diene block copolymers (hereinafter to be referred to as "block copolymer") find a wide range of uses as parts in foot wear and industrial articles. For instance, styrene-isoprene block copolymers (hereinafter to be referred to as "SIS") closely resemble polyisoprene and natural rubber and since they have hot melt properties which polyisoprene and natural rubber do not have, they are often used as non-solvent hot melt adhesives.

Besides SIS, hydrogenated polyterpene resins and a paraffin oil softener are blended to prepare hot melt adhesives with heating in a mixer, such as a vessel mixer or a sealed kneader, and the adhesive obtained can be applied with heating by using for instance a die coater to form sticky tape, or a hot melt gun to apply the adhesive to paper diapers.

The light fastness of block copolymers is not very stable, however, and the end product, for instance sticky tape, when it lies in a show window which is accessible to sun rays, will discolour and lose its adhesive power.

Thus far, light fastness stabilizing agents were added to the block copolymers. Generally used light fastness stabilizing agents are benzotriazole compounds and a sole sterically hindered amine compound (Japanese Patent Specification 61-42554), or sterically hindered phenol and phosphorus compounds (Japanese Patent Specification 61-34049), high grade resin acids (Japanese Patent Specification 60-72953), and a combination of process oil and benzotriazole, optionally used together with a hindered amine compound or used instead of it (Japanese Patent Specification 60-108458) have been proposed, but the results of none of these are very satisfactory.

The inventors have carried out an investigation into the above problems, which has led to the present invention, in which a mixture of a benzotriazole compound and a hindered amine compound is added in a small quantity to the block copolymer to achieve block copolymer compositions having superior light stability properties.

Accordingly, the invention provides a composition comprising an aromatic vinyl compound-conjugated diene block copolymer, characterized in that the composition compirses a mixture of

(A) a benzotriazole compound of the general formula I

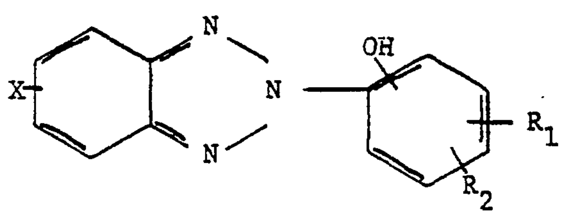

(I)

wherein $R_1$ and $R_2$ each represent a hydrogen atom or an alkyl group with in the range of from 1 to 4 carbon atoms or a phenyl-substituted alkyl group with in the range of from 1 to 4 carbon atoms and X represents a hydrogen or halogen atom, and

(B) a sterically hindered amine compound of the general formula II

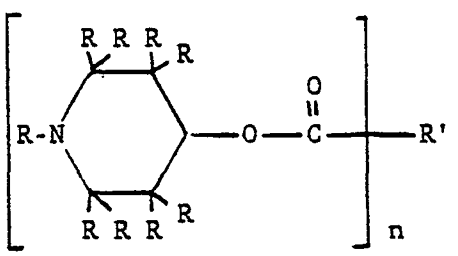

(II)

wherein each R, represents a hydrogen atom or an alkyl group with in the range of from 1 to 4 carbon atoms, with the proviso that at least one R in a position ortho to the NR group represents such an alkyl group, R′ represents a hydrocarbon residue having in the range of from 1 to 6 carbon atoms, n is an integer

in the range of from 3 to 6, said mixture being present in a content in the range of from 0.3 to 5 parts by weight per 100 parts by weight of said block copolymer and the benzotriazole compound (A) and the sterically hindered amine compound (B) being present in a weight ratio A:B in the range of from 20:80 to 80:20.

The block copolymers used in the compositions of the present invention are block copolymers made up of an aromatic vinyl compound and a conjugated diene of the following formula
$(A\text{-}B)_n$ , $(A\text{-}B)_n$ A, $(A\text{-}B)_n$ X ,
wherein A represents the polymer block of the aromatic vinyl compound, B the conjugated diene polymer block and X a coupling agent residue and n is an integer of at least 1.

Suitable aromatic vinyl compounds are styrene, α-methylstyrene, p-methylstyrene, m-methylstyrene, o-methylstyrene, p-tert-butylstyrene, o-, m- and p-dimethylstyrene, 1- and 2-vinylnaphthalene, with styrene being preferred.

Suitable conjugated diene compounds have in the range of from 4 to 8 carbon atoms per molecule. Examples thereof are butadiene, isoprene, piperylene, of which butadiene and isoprene are preferred, isoprene being particularly preferred.

Suitable coupling agents are polyhalides, such as dibromoethane and silicontetrachloride and such compounds as polyesters, polyepoxides, aromatic polyvinyl compounds and polyketones.

The aromatic vinyl compound is suitably present in the block polymer in a content in the range of from 5 to 90% by weight, preferably from 5 to 45% by weight and in particular from 10 to 40% by weight, calculated on block copolymer. The number average molecular weight of the block copolymer is in the range of from 5,000 to 500,000, preferably from 10,000 to 400,000.

The benzotriazole compound (A) represented by the afore-mentioned formula (I) which is used in the compositions according to the present invention suitably has the general formula Ia

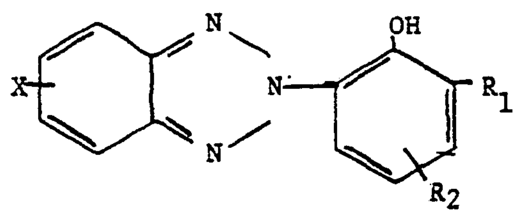

(Ia)

Suitable examples of benzotriazole compounds of the general formula Ia are 2-(5-methyl-2-hydroxyphenyl)-benzotriazole, 2-[2-hydroxy-3,5-bis(α,α-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl-5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole. Of these benzotriazole compounds, 2-(5-methyl-2-hydroxyphenyl)benzotriazole is preferred.

The sterically hindered amine compound (B) represented by the afore-mentioned formula (II) which is used in the compositions of the present invention is suitably

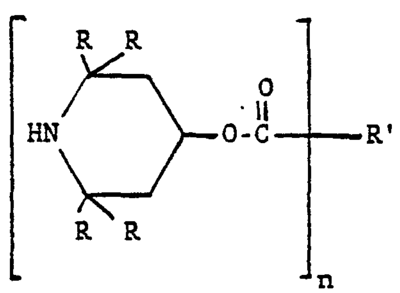

in which n is preferably 3 or 4 and in particular 4, a suitable example is tetrakis-(2,2,6,6-tetramethyl-4-piperidyl)-1,2,3,4-butane tetracarboxylate.

In the composition according to the present invention, the benzotriazole compound (A) and the hindered amine compound (B) are preferably present in a weight ratio A:B in the range of from 30:70 to 70:30.

Neither the benzotriazole compound (A) nor the hindered amine compound (B) when used alone will have a highly stabilizing effect, but when used as a mixture of the ratio and in the range; stated

hereinbefore, the total result is synergistic.

The total amount of benzotriazole compound (A) and hindered amine compound (B) used in the present invention is 0.3-5 pbw, preferably 0.5-3 pbw and in particular 0.5 to 2 pbw on 100 pbw of block copolymer. When less than 0.3 pbw is used, the stabilizing effect will be small, whilst adding more than 3 pbw will alter the effect no further.

The invention further provides a process for the preparation of a composition according to the present invention which comprises incorporating a mixture of

(A) a benzotriazole compound of the general formula I

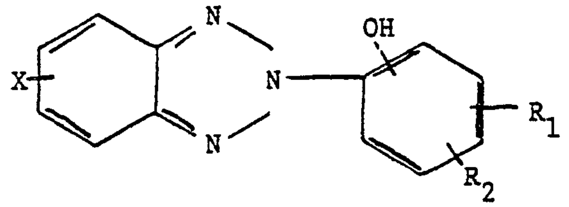

(I)

wherein $R_1$ and $R_2$ each represent a hydrogen atom or an alkyl group with in the range of from 1 to 4 carbon atoms or a phenyl-substituted alkyl group with in the range of from 1 to 4 carbon atoms and X represents a hydrogen or halogen atom, and

(B) a sterically hindered amine compound of the general formula II

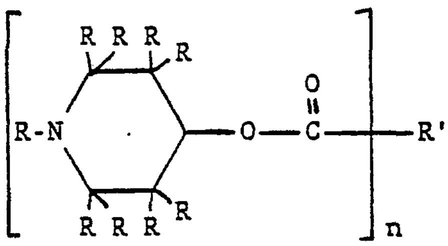

(II)

wherein each R represents a hydrogen atom or an alkyl group with in the range of from 1 to 4 carbon atoms, with the proviso that at least one R in a position ortho to the NR group represents such an alkyl group, R′ represents a hydrocarbon residue having in the range of from 1 to 6 carbon atoms, n is an integer in the range of from 3 to 6,

in a composition comprising an aromatic vinyl compound-conjugated diene block copolymer, said mixture being incorporated in a content in the range of from 0.3 to 5 parts by weight per 100 parts by weight of said block copolymer and the benzotriazole compound (A) and the sterically hindered amine compound (B) being incorporated in a weight ratio A:B in the range of from 20:80 to 80:20.

The block copolymer compositions of the present invention may be prepared by mixing the components generally mentioned hereinbefore in the usual vessel type mixer or sealed kneader while adding heat or, as required, in an atmosphere of nitrogen gas, but the benzotriazole compound (A) and the hindered amine compound (B) may be added by premixing these two ingredients or by adding them one by one to the polymer solution after polymerization, or by adding either one to the polymer solution after polymerization and charging the other to the column where the solvent is removed, or by charging both (A) and (B) to this column; they may also be added to adhesives when the latter are being mixed by means for instance of a kneader or a Banbury mixer.

The block copolymer compositions of the present invention can be put to the known uses of aromatic vinyl compound-conjugated diene block copolymers, for instance as mould goods for foot wear, daily appliances, industrial articles, and in particular they are useful in tackifiers.

As the compositions according to the present invention have excellent light stability, discolouring and loss of tackiness of the end product, for instance sticky tape, is overcome, so that their industrial value is very high.

The invention will be further illustrated with the aid of the following Examples and Comparative Experiments. The Examples are according to the present invention, the Comparative Experiments are not.

EXAMPLES 1-3 AND COMPARATIVE EXPERIMENTS A-I

1) Preparation of block copolymer compositions

After an autoclave was charged with 1600 g of a 9/1 liquid mixture of cyclohexane/n-pentane, and 0.12 g of tetrahydrofuran, the temperature in the autoclave was brought to 60° C. Then, after addition of a hexane solution containing 0.5 g of n-butyl lithium, styrene monomer (30 g), isoprene monomer (340 g) and styrene monomer (30 g) were added in this order and polymerization was allowed to take place. An alcohol was added and subsequently 1.5 parts by weight (pbw) of a light fastness stabilizing agent as shown in the column for Example 1 in Table 1 was added on 100 pbw SIS and after it had been stirred to a uniform substance, the cyclohexane/n-pentane was removed by heating. Thus was prepared the sample of SIS composition.

After SIS was prepared in the same way, 11 samples of SIS composition, viz. for Examples 2 and 3 and Comparative Experiments A-I, were prepared by adding each one of the light fastness stabilizing agents listed in Table 1, stirring the mixture and removing the solvent.

2) Light fastness stabilization test

Of the SIS compositions prepared in the manner described before, sheets of 2 mm thickness were moulded by pressing at 130° C for 5 minutes. These press sheets were subjected over 190 hours to an accelerated light deterioration test by means of a sunshine Weather-Ometer; then the tear resistance (with the aid of a tensile strength test) and the colouring of the sheets were determined.

The tensile strength was determined by stamping out ring-shaped SIS test sheets with an inner diameter of 11.5 mm and an outer diameter of 13.8 mm and pulling these at a rate of 500 mm/min to find the tear strength. A colouring gauge (ex Suga) was used to find the degree of discolouration, which is given by the following equation

$$E = \sqrt{(L-L_0)^2 + (a-a_0)^2 + (b-b_0)^2}$$

E = the degree of discolouring,
L = the brightness of the light,
a = red colour,
b = yellow colour

Table 1 gives the results of the accelerated light deterioration tests carried out with the SIS samples of Examples 1-3 and Comparative Experiments A-I.

From Table 1 it is seen that light stability is better when a mixture of benzotriazole compound/hindered amine compound is added than when either a benzotriazole compound or a hindered amine compound is added alone; similarly, it is better than when a combination of benzotriazole compound and another stabilizing agent is added. It is seen that around 30/70-70/30 benzotriazole compound/hindered amine compound leads of excellent light stability.

TABLE 1

| | Light fastness stabilizing agent | Mixing ratio weight ratio | Amount added (pbw/100 pbw SIS) | Tear resist. before test | Tear resist. after 190 h | Discolouring after 190 h |
|---|---|---|---|---|---|---|
| Example 1 | [*1] Stabilizer A/[*2] Stabilizer B | 30/70 | 1.5 | 89 | 54 | 1.2 |
| Example 2 | [*1] Stabilizer A/[*2] Stabilizer B | 50/50 | 1.5 | 90 | 64 | 1.5 |
| Example 3 | [*1] Stabilizer A/[*2] Stabilizer B | 70/30 | 1.5 | 90 | 64 | 1.7 |
| Comp. Exp. A | Stabilizer A | 100 | 1.5 | 90 | 18 | 6.8 |
| Comp. Exp. B | Stabilizer B | 100 | 1.5 | 90 | 3 | 9.5 |
| Comp. Exp. C | Stabilizer A/[*3] Stabilizer C | 50/50 | 1.5 | 90 | 34 | 5.8 |
| Comp. Exp. D | Stabilizer A/[*4] Stabilizer D | 50/50 | 1.5 | 90 | 40 | 13.8 |
| Comp. Exp. E | Stabilizer A/[*5] Stabilizer E | 50/50 | 1.5 | 88 | 37 | 6.0 |
| Comp. Exp. F | Stabilizer A/Stabilizer B | 10/90 | 1.5 | 89 | 9 | 7.3 |
| Comp. Exp. G | Stabilizer A/Stabilizer B | 90/10 | 1.5 | 89 | 21 | 6.0 |
| Comp. Exp. H | Stabilizer A/Stabilizer E[*6] | 50/50 | 1.5 | 90 | 40 | 6.7 |
| Comp. Exp. I | Stabilizer A/Stabilizer F[*7] | 50/50 | 1.5 | 90 | 42 | 10.8 |

*1 stabilizing agent A:
2-(5-methyl-2-hydroxyphenyl)benzotriazole

*2 stabilizing agent B:
tetrakis-(2,2,6,6-tetramethyl-4-piperidyl)-1,2,3,4-butane tetracarboxylate (trade name: Mark LA 57, ex Adekaya Gas)

*3 stabilizing agent C:
octadecyl-3-(3',5'-di-tert-butyl-4'-hydroxyphenyl) propionate

*4 stabilizing agent D:
6-(4-hydroxy-3,5-di-tert-butylanilino)2,4-bisoctyl-thio-1,3,5-triazine

*5 stabilizing agent E:
trisnonylphenyl phosphite

*6 stabilizing agent F:
bis-(2,2,6,6-tetramethyl-4-piperidyl) sebacate (trade name: Sanol LS 770, ex Sankyo)

*7 stabilizing agent G:
polymer type sterically hindered amine (mol. weight 2000, trade name: Sumisoap LS-2000, ex Sumitomo)

EXAMPLES 4-9, COMPARATIVE EXPERIMENTS J AND K

The eight SIS compositions (Example 4-9 and Comparative Experiments J and K) listed in Table 2 were prepared in a way similar to that of the examples described hereinbefore, using the light fastness stabilizing agents used in Example 2 (stabilizing agents A/B weight ratio 50/50), the only difference being that the amounts added were different. These samples were subjected in the same way to accelerating light deterioration tests. The results are listed in Table 2.

TABLE 2

| | Light fastness stabilizing agent | Mixing ratio weight ratio | Amount added (pbw/100 pbw SIS) | Tear resist. before test | Tear resist. after 190 h | Discolouring after 190 h |
|---|---|---|---|---|---|---|
| Example 4 | Stabilizer A/Stabilizer B | 50/50 | 0.5 | 89 | 54 | 2.1 |
| Example 5 | Stabilizer A/Stabilizer B | 50/50 | 1.0 | 90 | 64 | 1.5 |
| Example 6 | Stabilizer A/Stabilizer B | 50/50 | 1.5 | 90 | 64 | 1.5 |
| Example 7 | Stabilizer A/Stabilizer B | 50/50 | 2.0 | 90 | 65 | 1.5 |
| Example 8 | Stabilizer A/Stabilizer B | 50/50 | 2.5 | 89 | 65 | 1.3 |
| Example 9 | Stabilizer A/Stabilizer B | 50/50 | 3.0 | 90 | 65 | 1.3 |
| Comp. Exp. J | Stabilizer A/Stabilizer B | 50/50 | 0.1 | 89 | 13 | 8.0 |
| Comp. Exp. K | Stabilizer A/Stabilizer B | 50/50 | 4.0 | 90 | 65 | 1.3 |

From Table 2 it is seen that the addition of 0.5-2.0 pbw of benzotriazole compound/hindered amine compound on 100 pbw of SIS will lead to excellent light stability.

## Claims

1. A composition comprising an aromatic vinyl compound-conjugated diene block copolymer, characterized in that the composition comprises a mixture of
(A) a benzotriazole compound of the general formula I

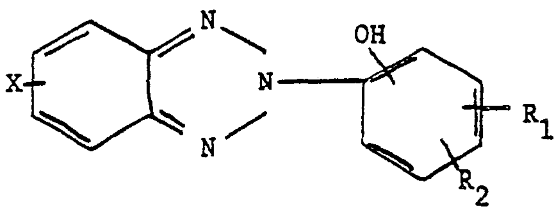

(I)

wherein $R_1$ and $R_2$ each represent a hydrogen atom or an alkyl group with in the range of from 1 to 4 carbon atoms or a phenyl-substituted alkyl group with in the range of from 1 to 4 carbon atoms and X represents a hydrogen or halogen atom, and
(B) a sterically hindered amine compound of the general formula II

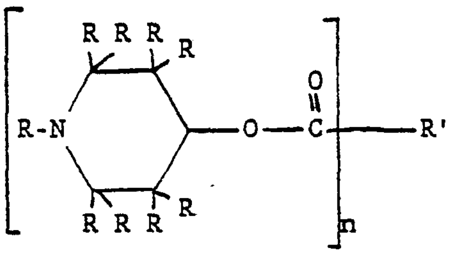

(II)

wherein each R represents a hydrogen atom or an alkyl group with in the range of from 1 to 4 carbon atoms, with the proviso that at least one R in a position ortho to the NR group represents such an alkyl group, $R'$ represents a hydrocarbon residue having in the range of from 1 to 6 carbon atoms, n is an integer in the range of from 3 to 6,
said mixture being present in a content in the range of from 0.3 to 5 parts by weight per 100 parts by weight of said block copolymer and the benzotriazole compound (A) and the sterically hindered amine compound (B) being present in a weight ratio A:B in the range of from 20:80 to 80:20.

2. A composition as claimed in claim 1, in which the weight ratio of A:B is in the range of from 30:70 to 70:30.

3. A composition as claimed in claim 1 or 2 in which the block copolymer has one of the general formulae
$(A-B)_n$ , $(A-B)_n$ A or $(A-B)_n$ X
wherein A represents the polymer block of the aromatic vinyl compound, B the conjugated diene polymer block and X a coupling agent residue and n is an integer of at least one.

4. A composition as claimed in any one of the preceding claims in which the aromatic vinyl compound is styrene.

5. A composition as claimed in any one of the preceding claims in which the conjugated diene has in the range of from 4 to 8 carbon atoms per molecule.

6. A composition as claimed in claim 5 in which the conjugated diene is isoprene.

7. A composition as claimed in any one of the preceding claims in which the aromatic vinyl compound is present in the block copolymer in a content in the range of from 5 to 90% by weight, calculated on block copolymer.

8. A composition as claimed in any one of the preceding claims in which the benzotriazole compound has the general formula Ia

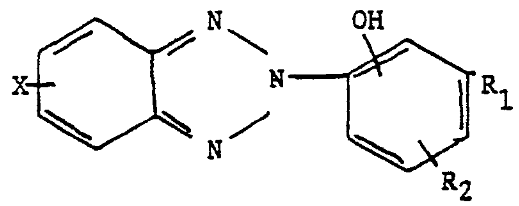

(Ia)

wherein $R^1$ , $R^2$ and X have the same meaning as in the general formula I.

9. A composition as claimed in claim 8 in which the compound of the general formula Ia is 2-(5-methyl-2-hydroxyphenyl)benzotriazole.

10. A composition as claimed in any one of the preceding claims in which the sterically hindered amine compound has the general formula IIa

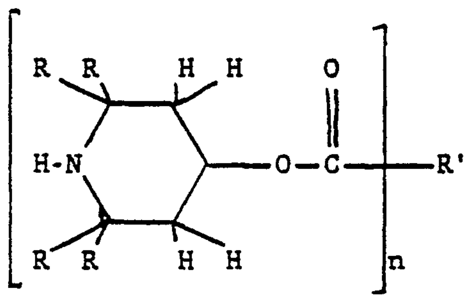

(IIa)

wherein R and R′ have the same meaning as in the general formula II and n is equal to 3 or 4.

11. A compositions as claimed in claim 10 in which the compound of the general formula IIa is tetrakis-(2,2,6,6-tetramethyl-4-piperidyl)-1,2,3,4-butane tetracarboxylate.

12. A composition as claimed in any one of the preceding claims in which the mixture of (A) and (B) is present in a content in the range of from 0.3 to 3 parts by weight per 100 parts by weight of said block copolymer.

13. An article whenever containing a composition as claimed in any one of the preceding claims.

14. A process for the preparation of a composition as claimed in any one of claims 1 to 12 which process comprises incorporating a mixture of

(A) a benzotriazole compound of the general formula I

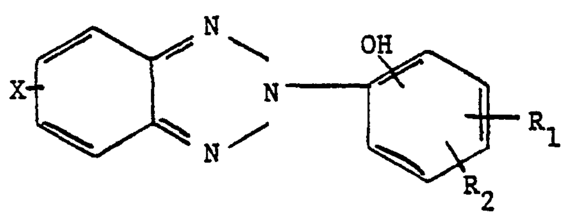

(I)

wherein $R_1$ and $R_2$ each represent a hydrogen atom or an alkyl group with in the range of from 1 to 4 carbon atoms or a phenyl-substituted alkyl group with in the range of from 1 to 4 carbon atoms and X represents a hydrogen or halogen atom, and

(B) a sterically hindered amine compound of the general formula II

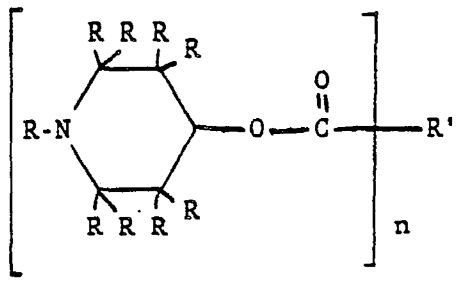

(II)

wherein each R, represents a hydrogen atom or an alkyl group with in the range of from 1 to 4 carbon atoms, with the proviso that at least one R in a position ortho to the NR group represents such an alkyl group, R′ represents a hydrocarbon residue having in the range of from 1 to 6 carbon atoms, n is an integer in the range of from 3 to 6,
in a composition comprising an aromatic vinyl compound-conjugated diene block copolymer, said mixture being incorporated in a content in the range of from 0.3 to 5 parts by weight per 100 parts by weight of said block copolymer and the benzotriazole compound (A) and the sterically hindered amine compound (B) being incorporated in a weight ratio A:B in the range of from 20:80 to 80:20.

European Patent Office

# EUROPEAN SEARCH REPORT

Application Number

EP 88 20 0170

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| Y | US-A-4 315 848 (DEXTER et al.)<br>* Claims *<br>--- | 1-14 | C 08 K 5/34<br>C 08 L 53/02 |
| Y,D | DATABASE WPIL, no. 85-137865, Derwent Publications Ltd, London, GB; & JP-A-60 072 953 (ASAHI CHEMICAL IND K.K.) 25-04-1985<br>* Abstract *<br>--- | 1-14 | |
| A | DE-A-3 343 676 (DYNAMIT NOBEL)<br>--- | | |
| A | EP-A-0 171 941 (POLYPLASTICS CO., LTD)<br>----- | | |
| | | | TECHNICAL FIELDS SEARCHED (Int. Cl.4) |
| | | | C 08 K |

The present search report has been drawn up for all claims

| Place of search | Date of completion of the search | Examiner |
|---|---|---|
| THE HAGUE | 14-10-1988 | MEULEMANS R.A.M.G.G. |

**CATEGORY OF CITED DOCUMENTS**

X : particularly relevant if taken alone
Y : particularly relevant if combined with another document of the same category
A : technological background
O : *non-written disclosure*
P : intermediate document

T : theory or principle underlying the invention
E : earlier patent document, but published on, or after the filing date
D : document cited in the application
L : document cited for other reasons

*& : member of the same patent family, corresponding document*